# EUROPEAN PATENT APPLICATION

(11) **EP 3 715 085 A1**
(43) Date of publication of application: **30.09.2020**
(21) Application number: 19199084.5
(22) Date of filing: 24.09.2019
(51) Int. Cl.: B29C 45/17, B29C 44/10, B29C 44/34, B29C 44/42, B29C 44/60, B29C 45/73, B29C 45/18

(54) **INJECTION MOLDING APPARATUS AND INJECTION MOLDING METHOD**

(30) Priority: 29.03.2019 TW 108111115
(71) Applicant: Chung Yuan Christian University, Taoyuan City 32023 (TW)
(72) Inventor: Chen, Shia-Chung, 32023 Taoyuan City (KR); Chang, Yung-Hsiang, 32023 Taoyuan City (KR); Lee, Kuan-Hua, 32023 Taoyuan City (KR); Chang, Che-Wei, 32023 Taoyuan City (KR)
(74) Representative: Ter Meer Steinmeister & Partner

(57) **Abstract**

An injection molding apparatus including an injection device, a mold, a gas supply device, and a temperature control device is provided. The mold has a mold cavity, wherein the injection device is adapted to inject a material into the mold cavity. The gas supply device is adapted to supply a gas to the mold cavity such that the pressure in the mold cavity is increased. The temperature control device is adapted to control the temperature in the mold cavity. In addition, an injection molding method is also provided.

## Description

### BACKGROUND OF THE INVENTION

### Field of the Invention

The invention relates to a molding apparatus and a molding method, and more particularly, to an injection molding apparatus and an injection molding method.

### Description of Related Art

The application of foam injection molding techniques in the polymer industry has become increasingly prevalent. These techniques may make the interior of an injection molding product be covered with fine bubbles, thereby strengthening the impact strength and sound insulation of the product, and at the same time reducing the weight of the product to achieve a lightweight effect. In recent years, the foam injection molding process has been applied to the footwear industry, and the foam quality control of injection molding products has received special attention. Therefore, how to make the bubbles have a uniform size and uniform distribution is an important issue in foam injection molding techniques.

### SUMMARY OF THE INVENTION

The invention provides an injection molding apparatus and an injection molding method which may provide uniform size and uniform distribution to bubbles in an injection molding product.

The injection molding apparatus of the invention includes an injection device, a mold, a gas supply device, and a temperature control device. The mold has a mold cavity, wherein the injection device is adapted to inject a material into the mold cavity. The gas supply device is adapted to supply a gas into the mold cavity such that the pressure in the mold cavity is increased. The temperature control device is adapted to control the temperature in the mold cavity.

In an embodiment of the invention, the injection molding apparatus includes a gas flow valve, wherein the mold has at least one gas flow opening, the gas supply device supplies the gas into the mold cavity through the at least one gas flow opening, and the gas flow valve is connected to the at least one gas flow opening.

In an embodiment of the invention, the temperature control device includes a heating device adapted to heat the mold.

In an embodiment of the invention, the temperature control device is adapted to control the temperature in the mold cavity in a constant temperature.

In an embodiment of the invention, the injection molding apparatus includes a fluid-to-be-foamed supply device, wherein the fluid-to-be-foamed supply device is adapted to supply a fluid-to-be-foamed to the injection device, and the injection device is adapted to mix the material and the fluid-to-be-foamed and inject the material and the fluid-to-be-foamed into the mold cavity.

In an embodiment of the invention, the injection device is adapted to inject the material into the mold cavity within a time period, the gas supply device is adapted to supply the gas to the mold cavity during the time period, and the temperature control device is adapted to change the temperature in the mold cavity during the time period.

The injection molding method of the invention includes the following steps. A material is injected into a mold cavity via an injection device. The pressure in the mold cavity is increased by supplying a gas into the mold cavity via a gas supply device. The temperature in the mold cavity is controlled via a temperature control device.

In an embodiment of the invention, the injection molding method includes heating the mold via a heating device.

In an embodiment of the invention, the injection molding method includes controlling the temperature in the mold cavity in a constant temperature via the temperature control device.

In an embodiment of the invention, the injection molding method includes the following steps. A fluid-to-be-foamed is supplied to the injection device via a fluid-to-be-foamed supply device, and the material and the fluid-to-be-foamed are mixed via the injection device and the the material and the fluid-to-be-foamed are injected into the mold cavity.

In an embodiment of the invention, the injection molding method includes the following steps. The material is injected into the mold cavity via the injection device within a time period, the gas is supplied to the mold cavity via the gas supply device within the time period, and the temperature in the mold cavity is changed via the temperature control device within the time period.

Based on the above, in the invention, in addition to increasing the pressure in the mold cavity via the gas supplied by the gas supply device, the temperature in the mold cavity is further controlled via the temperature control device. The gas supply device suppresses the foaming of the fluid-to-be-foamed injected into the material in the mold by increasing the pressure in the mold cavity. After the surface of the material injected into the mold is cooled and solidified, the pressure of the mold cavity is no longer increased via the gas supply device, so that a plurality of bubble nuclei formed by the fluid-to-be-foamed in the material simultaneously start to foam with the decrease in pressure. Thereby, it is possible to prevent the surface of the material from being defective due to the foaming of the fluid-to-be-foamed in a state where it is not yet solidified, and the foaming of the fluid-to-be-foamed may be uniform. The temperature control device may allow the solidified layer on the surface of the product to not be excessively thick by increasing the temperature in the mold cavity, so that the foam may be uniformly distributed near the surface of the product. In addition, by increasing the temperature in the mold cavity, the material may be bonded to the inner surface of the mold as much as possible to smoothen the surface of the product. That is to say, the gas supply device and the temperature control device promote the foaming uniformity of the material respectively via the control of pressure and temperature, and promote the smooth and defect-free surface of the product respectively via the control of pressure and temperature. Therefore, the gas supply device is used in conjunction with the temperature control device to produce a mutually additive effect of enhanced foam uniformity in the product and enhanced surface smoothness of the product. Further, while increasing the temperature in the mold cavity via the temperature control device, the gas supply device is used to increase the pressure in the mold cavity, thereby suppressing uneven distribution of foaming in the material due to high temperature. In addition, while increasing the pressure in the mold cavity via the gas supply device, the temperature in the mold cavity is increased via the temperature control device, so that bubbles in the material are prevented from being too small due to high pressure.

In order to make the aforementioned features and advantages of the disclosure more comprehensible, embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic of an injection molding apparatus of an embodiment of the invention.
FIG. 2 is a flowchart of an injection molding method of an embodiment of the invention.
FIG. 3 shows temperature and pressure changes in the mold cavity of FIG. 1.
FIG. 4 shows temperature and pressure changes in the mold cavity of FIG. 1.

### DESCRIPTION OF THE EMBODIMENTS

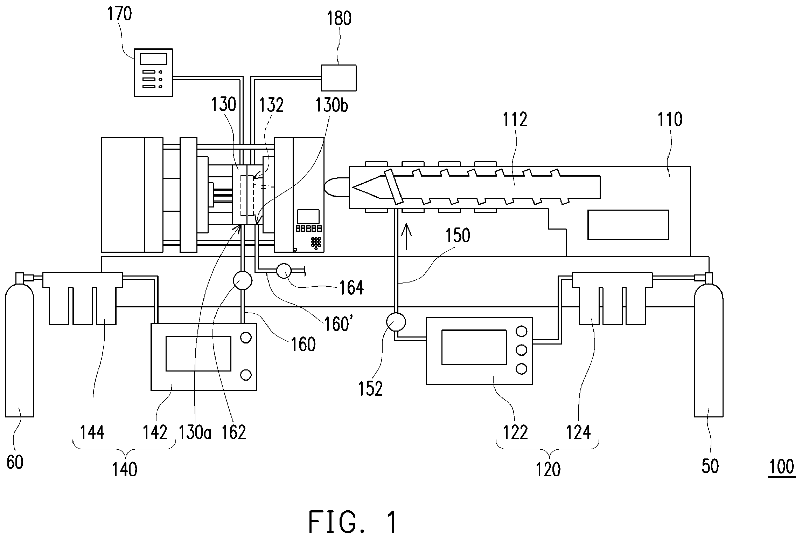

FIG. 1 is a schematic of an injection molding apparatus of an embodiment of the invention. Referring to FIG. 1, an injection molding apparatus 100 of the present embodiment includes an injection device 110, a fluid-to-be-foamed supply device 120, a mold 130, a gas supply device 140, and a temperature control device 170. The mold 130 has a mold cavity 132. The fluid-to-be-foamed supply device 120 is adapted to supply a fluid-to-be-foamed (a fluid with foaming characteristic, such as a supercritical fluid or a foaming agent) to the injection device 110, and the injection device 110 is adapted to mix a material and the fluid-to-be-foamed via a screw 112 thereof and to inject the material and the fluid-to-be-foamed into the mold cavity 132. The gas supply device 140 is adapted to supply a gas into the mold cavity 132 such that the pressure in the mold cavity 132 is increased. The temperature control device 170, for example, dynamically controls the temperature in the mold cavity 132, statically controls the temperature in the mold cavity 132, or both dynamically and statically controls the temperature in the mold cavity 132.

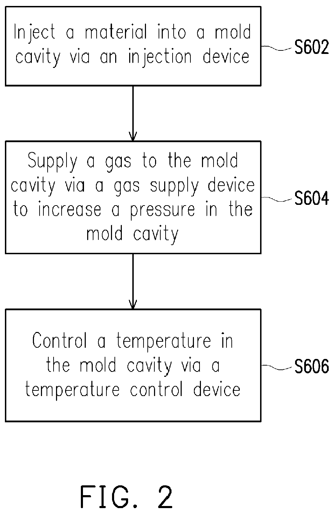

Hereinafter, the injection molding apparatus 100 shown in FIG. 1 is taken as an example to explain the injection molding method of an embodiment of the invention. FIG. 2 is a flowchart of an injection molding method of an embodiment of the invention. Referring to FIG. 2, first, a material is injected into the mold cavity 132 via the injection device 110 (step S602). A gas is supplied to the mold cavity 132 via the gas supply device 140 to increase the pressure in the mold cavity 132 (step S604). The temperature in the mold cavity 132 is controlled via the temperature control device 170 (step S606).

The gas supply device 140 suppresses the foaming of the fluid-to-be-foamed injected into the material in the mold 130 by increasing the pressure in the mold cavity 132. After the surface of the material injected into the mold 130 is cooled and solidified, the pressure of the mold cavity is no longer increased via the gas supply device 140, so that a plurality of bubble nuclei formed by the fluid-to-be-foamed in the material simultaneously start to foam with the decrease in pressure. Thereby, it is possible to prevent the surface of the material from being defective due to the foaming of the fluid-to-be-foamed in a state where it is not yet solidified, and the foaming of the fluid-to-be-foamed may be uniform.

The temperature control device 170 may allow the solidified layer on the surface of the product to not be excessively thick by increasing the temperature in the mold cavity 132, so that the foam may be uniformly distributed near the surface of the product. In addition, by increasing the temperature in the mold cavity 132, the material may be bonded to the inner surface of the mold 130 as much as possible to smoothen the surface of the product.

That is to say, the gas supply device 140 and the temperature control device 170 promote the foaming uniformity of the material respectively via the control of pressure and temperature, and promote the smooth and defect-free surface of the product respectively via the control of pressure and temperature. Therefore, the gas supply device 140 is used in conjunction with the temperature control device 170 to produce a mutually additive effect of enhanced foam uniformity in the product and enhanced surface smoothness of the product.

Further, while increasing the temperature in the mold cavity 132 via the temperature control device 170, the gas supply device 140 is used to increase the pressure in the mold cavity 132, thereby suppressing uneven distribution of foaming in the material due to high temperature. In addition, while increasing the pressure in the mold cavity via the gas supply device 140, the temperature in the mold cavity is increased via the temperature control device 170, so that bubbles in the material are prevented from being too small due to high pressure.

In the present embodiment, the injection molding apparatus 100 includes a thermostat device 180, such as a water circulation temperature control device, and is adapted to control the temperature in the mold cavity 132. The temperature control device 170 is, for example, a heating device that is adapted to heat the mold 130 to increase the temperature in the mold cavity 132 while the thermostat device 180 performs temperature control on the mold cavity 132. In other embodiments, the thermostat device 180 may not be disposed and the temperature in the mold cavity 132 is control in a constant temperature by the temperature control device 170, and the invention is not limited in this regard.

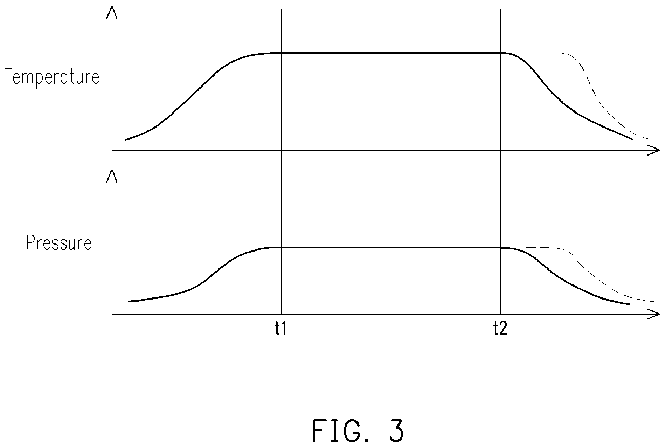

FIG. 3 shows temperature and pressure changes in the mold cavity of FIG. 1. In the present embodiment, the injection device 110 injects a material into the mold cavity 132, for example, within a time period between a time t1 and a time t2 shown in FIG. 2. Accordingly, the gas supply device 140 supplies a gas to the mold cavity 132 within the time period between the time t1 and the time t2 such that the pressure in the mold cavity 132 is increased within the time period between the time t1 and the time t2 as shown in FIG. 2. Moreover, the temperature control device 170 changes (such as increases) the temperature in the mold cavity 132 within the time period between the time t1 and the time t2. By injecting the material into the mold cavity 132 at the injection device 110, the effects of foaming uniformity of the material and smooth surface of the material are clearly achieved by the increase in temperature and pressure in the mold cavity 132 as described above.

As shown in FIG. 3, the length of time that the gas supply device 140 is in operation may also be extended as needed until after the time t2 (as indicated by the dashed line in FIG. 2) to continue to provide a pressurizing effect during the material cooling process. Similarly, the length of time that the temperature control device 170 is in operation may be extended as needed until after the time t2 (as indicated by the dashed line in FIG. 2) to continue to provide a heating effect during the material cooling process.

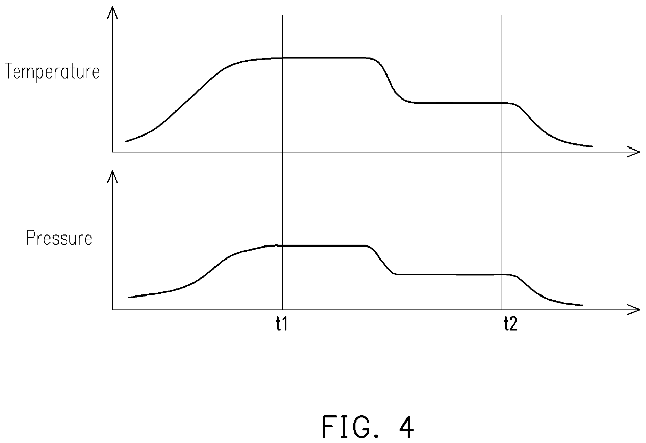

FIG. 4 shows temperature and pressure changes in the mold cavity of FIG. 1. Since different parts of the injection molding product may have different sizes and thicknesses and different heating and pressurizing requirements, and the different parts are respectively injection molded at different time points, when the injection device 110 injects the material into the mold cavity 132, according to different time points, the pressure in the mold cavity 132 may be sequentially changed into a plurality of different pressure values (two are shown) via the control of the gas supply device 140 as shown in FIG. 4, and the temperature in the mold cavity 132 may be sequentially changed into a plurality of different temperature values (two are shown) via the control of the temperature control device 170 as shown in FIG. 3.

In the present embodiment, the fluid-to-be-foamed supply device 120 includes a gas pressurizing unit 122 and a filter unit 124. The filter unit 124 is adapted to filter a gas (e.g., an inert gas) from a gas storage unit 50, and the filtered gas is delivered to the gas pressurizing unit 122. The gas pressurizing unit 122 is adapted to pressurize the gas to form a fluid-to-be-foamed. Depending on the source gas, the gas pressurizing unit 122 may be modified into a gas heating unit or a gas pressurizing/heating unit to heat or pressurize/heat the source gas, which is not limited by the invention.

Moreover, the gas supply device 140 of the present embodiment includes a gas injection unit 142 and a filter unit 144. The filter unit 144 is adapted to filter a gas (e.g., an inert gas) from a gas storage unit 60, and the filtered gas is delivered to the gas injection unit 142. The gas injection unit 142 is adapted to inject the gas into the mold 130 via a gas counter pressure technique to increase the pressure in the mold 130.

Further, the injection molding apparatus 100 of the present embodiment includes a pathway 150 and a pressure-sensing element 152. The pathway 150 is connected between the injection device 110 and the fluid-to-be-foamed supply device 120. The fluid-to-be-foamed supply device 120 is adapted to supply a fluid-to-be-foamed to the injection device 110 via the pathway 150. The pressure-sensing element 152 is disposed on the pathway 150 for sensing the pressure when the gas is injected into the injection device 110 so as to control the injection pressure when the fluid-to-be-foamed supply device 120 injects the gas into the injection device 110.

Similarly, the injection molding apparatus 100 of the present embodiment includes another two pathways 160 and 160' and another pressure-sensing element 162. The pathway 160 is connected between a gas inlet 130a of the mold 130 and the gas supply device 140, the pathway 160' is connected to a gas outlet 130b, the gas supply device 140 is adapted to supply a gas into the mold cavity 132 via the pathway 160 and the gas inlet 130a, and the pressure-sensing element 162 is disposed on the pathway 160 for sensing the pressure when the gas injected into the mold 130 so as to control the injection pressure when the gas supply device 140 injects the gas into the mold 130. In addition, the injection molding apparatus 100 includes a gas flow valve 164, the gas flow valve 164 is disposed at the pathway 160' and connected to a gas flow opening (such as the gas outlet 130b) of the mold 130. In other embodiments, the gas flow valve 164 may be disposed at the pathway 160 and connected to another gas flow opening (such as the gas inlet 130a) of the mold 130. The gas flow valve is for confirming the establishing of the pressure in the mold cavity 132, adjusting the pressure in the mold cavity 132 and controlling the pressure in the mold cavity 132 dynamically. In some embodiments, the mold 130 may have the gas inlet 130a without having the gas outlet 130b, and the invention is not limited thereto.

Based on the above, in the invention, in addition to increasing the pressure in the mold cavity via the gas supplied by the gas supply device, the temperature in the mold cavity is further controlled via the temperature control device. The gas supply device suppresses the foaming of the fluid-to-be-foamed injected into the material in the mold by increasing the pressure in the mold cavity. After the surface of the material injected into the mold is cooled and solidified, the pressure of the mold cavity is no longer increased via the gas supply device, so that a plurality of bubble nuclei formed by the fluid-to-be-foamed in the material simultaneously start to foam with the decrease in pressure. Thereby, it is possible to prevent the surface of the material from being defective due to the foaming of the fluid-to-be-foamed in a state where it is not yet solidified, and the foaming of the fluid-to-be-foamed may be uniform. The temperature control device may allow the solidified layer on the surface of the product to not be excessively thick by increasing the temperature in the mold cavity, so that the foam may be uniformly distributed near the surface of the product. In addition, by increasing the temperature in the mold cavity, the material may be bonded to the inner surface of the mold as much as possible to smoothen the surface of the product. That is to say, the gas supply device and the temperature control device promote the foaming uniformity of the material respectively via the control of pressure and temperature, and promote the smooth and defect-free surface of the product respectively via the control of pressure and temperature. Therefore, the gas supply device is used in conjunction with the temperature control device to produce a mutually additive effect of enhanced foam uniformity in the product and enhanced surface smoothness of the product. Further, while increasing the temperature in the mold cavity via the temperature control device, the gas supply device is used to increase the pressure in the mold cavity, thereby suppressing uneven distribution of foaming in the material due to high temperature. In addition, while increasing the pressure in the mold cavity via the gas supply device, the temperature in the mold cavity is increased via the temperature control device, so that bubbles in the material are prevented from being too small due to high pressure.

## Claims

1. An injection molding apparatus (100), comprising:
an injection device (110);
a mold (130) having a mold cavity (132), wherein the injection device (110) is adapted to inject a material into the mold cavity (132);
a gas supply device (140) adapted to supply a gas into the mold cavity (132) such that a pressure in the mold cavity (132) is increased; and
a temperature control device (170) adapted to control a temperature in the mold cavity (132).

2. The injection molding apparatus (100) of claim 1, comprising a gas flow valve (164), wherein the mold (130) has at least one gas flow opening, the gas supply device (140) supplies the gas into the mold cavity (132) through the at least one gas flow opening, and the gas flow valve (164) is connected to the at least one gas flow opening.

3. The injection molding apparatus (100) of claim 1 or 2, wherein the temperature control device (170) comprises a heating device adapted to heat the mold (130).

4. The injection molding apparatus (100) of any one of claims 1 to 3, wherein the temperature control device (170) is adapted to control the temperature in the mold cavity (132) in a constant temperature.

5. The injection molding apparatus (100) of any one of claims 1 to 4, comprising a fluid-to-be-foamed supply device (120), wherein the fluid-to-be-foamed supply device (120) is adapted to supply a fluid-to-be-foamed to the injection device (110), and the injection device (110) is adapted to mix the material and the fluid-to-be-foamed and inject the material and the fluid-to-be-foamed into the mold cavity (132).

6. The injection molding apparatus (100) of any one of claims 1 to 5, wherein the injection device (110) is adapted to inject the material into the mold cavity (132) within a time period, the gas supply device (140) is adapted to supply the gas to the mold cavity (132) within the time period, and the temperature control device (170) is adapted to change the temperature in the mold cavity (132) within the time period.

7. An injection molding method, comprising:
injecting a material into a mold cavity (132) via an injection device (110);
increasing a pressure in the mold cavity (132) by supplying a gas to the mold cavity (132) via a gas supply device (140); and
controlling a temperature in the mold cavity (132) via a temperature control device (170).

8. The injection molding method of claim 7, comprising heating the mold (130) via a heating device.

9. The injection molding method of claim 7 or 8, comprising controlling the temperature in the mold cavity (132) in a constant temperature via the temperature control device (170).

10. The injection molding method of any one of claims 7 to 9, comprising supplying a fluid-to-be-foamed to the injection device (110) via a fluid-to-be-foamed supply device (120) and mixing the material and the fluid-to-be-foamed via the injection device (110) and injecting the material and the fluid-to-be-foamed into the mold cavity (132).

11. The injection molding method of any one of claims 7 to 10, comprising injecting the material into the mold cavity (132) via the injection device (110) within a time period, supplying the gas to the mold cavity (132) via the gas supply device (140) within the time period, and changing the temperature in the mold cavity (132) via the temperature control device (170) within the time period.
